Europäisches Patentamt

European Patent Office

Office européen des brevets

(19)

(11) Veröffentlichungsnummer: **0 222 195**
**B1**

(12) **EUROPÄISCHE PATENTSCHRIFT**

(45) Veröffentlichungstag der Patentschrift: **16.08.90**

(21) Anmeldenummer: **86114269.3**

(22) Anmeldetag: **15.10.86**

(51) Int. Cl.⁵: **H 04 L 25/38,** H 04 J 14/00, H 04 B 10/12

(54) **Verfahren und Vorrichtung zur Datenübertragung über mehrere parallele Leitungen, insbesondere Lichtwellenleiter.**

(30) Priorität: **29.10.85 DE 3538481**

(43) Veröffentlichungstag der Anmeldung: **20.05.87 Patentblatt 87/21**

(45) Bekanntmachung des Hinweises auf die Patenterteilung: **16.08.90 Patentblatt 90/33**

(84) Benannte Vertragsstaaten: **DE GB SE**

(56) Entgegenhaltungen:
**CA-A-1 170 723**
**CH-A- 646 826**
**DE-A-3 314 869**
**US-A-4 220 822**

**IEEE TRANSACTIONS ON POWER APPARATUS & SYSTEMS, Band PAS-99, Nr. 1, Januar/Februar 1980, Seiten 318-326, IEEE, New YORK, US; T. TAKAGI et al.: "Development of an intrastation optical-fiber data transmission system for electric power systems"**

(73) Patentinhaber: **Siemens Aktiengesellschaft Wittelsbacherplatz 2 D-8000 München 2 (DE)**

(72) Erfinder: **Munz, Dieter, Dipl.-Ing. Tilmann-Riemenschneider-Strasse 19 D-8552 Höchstadt (DE)**
Erfinder: **Schmiedel, Klaus, Dipl.-Ing. Richard-Strauss-Strasse 9 D-8520 Erlangen (DE)**
Erfinder: **Rumold, Gerhard, Dipl.-Ing. (FH) Lukasstrasse 5 D-8526 Bubenreuth (DE)**

EP 0 222 195 B1

Courier Press, Leamington Spa, England.

**Beschreibung**

Die Erfindung betrifft ein Verfahren zur Datenübertragung von einer Sendestation — insbesondere einer entfernten Sendestation — zu einer die Daten verarbeitenden Empfangsstation über mehrere parallele Leitungen, vorzugsweise Lichtwellenleiter. Die Erfindung betrifft ferner eine hierzu geeignete Vorrichtung.

Um mehrere Meßwerte oder Datenwörter (Bytes) innerhalb eines bestimmten Übertragungszyklus übertragen zu können, ist es üblich, jedem Meßwert eine eigene Übertragungsleitung zuzuordnen und die Einzeldaten (Bits) jedes Bytes in Form eines Daten-Telegramms zu ordnen und als Folge von Datenimpulsen so zu übermitteln, daß einem bestimmten Bit des Bytes ein bestimmter Datenimpuls-Platz im Datentelegramm zugeordnet ist. Um auf der gleichen Datenleitung nacheinander übermittelte Datentelegramme (die sich also jeweils über eine der Bit-Anzahl entsprechenden Anzahl von mit Datenimpulsen des Senders belegbaren Datenimpuls-Plätzen erstrecken) voneinander zu trennen, ist es bisher üblich, am Datentelegramm-Ende und nach einer Synchronisierungspause vorgegebener Mindestlänge am nachfolgenden Datentelegramm-Kopf bestimmte, fest vorgegebene Datenimpuls-Plätze nach einem Erkennungs-Code zu belegen.

Der Empfänger tastet in einem auf die Datenimpuls-Folgefrequenz ("Übertragungsfrequenz") abgestimmten Abtasttakt die Impulsbelegung der Datenimpuls-Plätze an seinem Kbl 2 Bmr/ 12.8.1986 Datenleitungs-Anschluß ab und ordnet die auf diesen Plätzen erfaßten Impulse den entsprechenden Bits des Datenwortes zu.

In der Regel enthält der Sender einen hochfrequenten Arbeitstakt, der den Übertragungstakt für die Impulsbelegung der Datentelegramme steuert, während im Empfänger ein eigener hochfrequenter Arbeitstakt das Abtasten der Datenimpuls-Plätze steuert. Ist eine eigene Taktleitung zu Synchronisierung des Empfänger-Abtasttakts mit dem Sender-Übertragungstakt nicht vorhanden, so ist die Synchronisierungspause nicht nur zur Trennung der Datentelegramme erforderlich, sondern wird auch dazu ausgenutzt, Phasenverschiebungen zwischen dem Sende-Übertragungstakt und der Abtastrate auszugleichen. Trotzdem ist bei einem derartigen asynchronen Übertragungsverfahren die Anzahl der belegbaren Datenimpuls-Plätze innerhalb jedes Datentelegramms wegen dieses Asynchronismus beschränkt, wobei außerdem ein Teil der verfügbaren Datenimpuls-Plätze durch den Erkennungscode für Telegramm-Kopf und Telegramm-Ende belegt ist.

Sollen in einem typischen Anwendungsfall z.B. über Leitungen, die Impulsfolgen mit einer Pulsfolgefrequenz von 1 MHz noch befriedigend aufzulösen gestatten, Daten mit jeweils 15 Bit übertragen werden, so scheidet ein derartiges asynchrones Verfahren aus Zeitgründen aus. Vielmehr müssen auf einer Taktleitung den Datenimpulsplätzen synchron zugeordnete Taktimpulse zur Verfügung stehen. Dabei ist jedem Taktimpuls ein Datenimpuls-Platz im Datentelegramm zugeordnet, so daß für die Übertragung eines Datentelegramms der Sender 15 Datenimpuls-Plätze im Datentelegramm mit entsprechenden Bits belegen muß. Diesen Datenimpuls-Plätzen entsprechen auf der Taktleitung ebenso viele Taktimpuls-Perioden, also eine Taktimpuls-Folge mit einer Dauer von 15 µ sec. Wird bei jedem Taktimpulswechsel ein neuer Datenimpuls-Platz angesteuert, so genügen demnach 8 Taktimpulse mit ihren dazwischen liegenden Pausen zur Bestimmung der Datenimpuls-Plätze. Die Mindestdauer der 1 MHz-Taktimpuls-Folge beträgt somit 7,5 µsec. Der Empfänger tastet im Takt der Taktimpulse die Datenimpuls-Platzbelegung innerhalb der an seinem Datenleitungs-Anschluß empfangenen Datentelegramme ab. Zur Erkennung des Telegramm-Endes muß aber noch ein Erkennungscode mit einer Signalpause vorgegebener Mindestlänge übermittelt und abgetastet werden, wodurch sich der für ein Byte erforderliche Übertragungszyklus verlängert, d.h. für die Übertragung der Datentelegramme einschließlich Code und Pause wird eine Zeit benötigt, die im erläuterten Anwendungsfall von 15 Datenbits/Byte einen wünschenswerten Übertragungszyklus von 10 µ sec/Byte übersteigt.

Aus der DE—OS 33 14 869 ist ein optoelektronisches Übertragungssystem bekannt, das in Lichtimpulse einer Lumineszenz-Diode übersetzte digitale Signale über Lichtwellenleiter und Photodioden mit einer hohen Pulsfrequenz überträgt. Jeweils acht Takte eines Taktgebers im Sender bilden einen Übertragungszyklus für 5-Bit-Daten, die in einem 6-Bit-Datentelegramm seriell in eine Datenleitung eingekoppelt werden. Das 6. Bit ist ein Lichtimpuls verminderter Intensität und zwei Übertragungstakte bilden eine Pause zwischen den Datentelegrammen. Auf einer parallel verlegten Taktleitung werden Takttelegramme übermittelt, die mit einem festen Takttelegramm-Teil aus 6 Pulsen, einem Zusatzimpuls verminderter Intensität und einer Taktpause aus einem Übertragungstakt bestehen.

Eine Pausenerkennungseinrichtung an der Taktleitung erkennt an den Taktpausen den Beginn eines neuen Datentelegrammes, das synchron mit dem festen Takttelegramm-Teil an der Datenleitung abgetastet wird. Fehlen im Datentelegramm das 6. Bit oder im Takttelegramm das 7. Bit mit der jeweils verminderten Intensität, so wird dadurch rechtzeitig gemeldet, daß eine Störung des Übertragungssystems durch Alterung der Lumineszenz-Dioden und/oder Photodioden und/oder Absorption und Streuung im Lichtwellenleiter droht.

Abgesehen von dieser Überwachung des Übertragungssystems erfolgt jedoch die Datenübertragung ausschließlich über die Datenleitung, die zur Erkennung eines Telegrammendes nötige Telegrammpause ist auf beiden Leitungen eingehalten und das Abtasten der Daten geschieht ausschließlich synchron mit den festen Teilen der Takttelegramme.

Für ein Zeitmultiplex-Verfahren werden gemäß der US—PS 4 220 822 bei einer Eingabe/Ausgabe-Einrichtung einer datenverarbeitenden Anlage von einem zentralen, an den Arbeitstakt der Anlage angeschlossenen Impulsgeber Impulsfolgen von jeweils 64 Taktimpulsen auf einer Taktleitung bereitgestellt. Von acht an eine gemeinsame Datenleitung angeschlossenen Übertragern sollen nacheinander Datentelegramme von jeweils 8 Bit in acht Empfänger eingelesen werden. Nach jeweils 64 Taktimpulsen erfolgt auf beiden Leitungen eine Telegrammpause.

Dazu werden in jedem Übertrager jeweils mit dem Beginn einer neuen Impulsfolge die Taktimpulse gezählt. Die Übertrager mit ihren zugeordneten Empfängern werden nacheinander nur für die Dauer einer Teilfolge aus 8 Taktimpulsen aktiviert. Jede Teilfolge dient zur Synchronisation von Übertrager und Empfänger, während jede ganze Impulsefolge als Telegramm die zeitmultiplexe Aktivierung der Übertrager/Empfänger-Paare steuert.

Durch entsprechende Programmierung kann die Länge und die Anzahl der Datentelegramme dem Anwendungsfall angepaßt werden. Da aber die Fehlerhäufigkeit mit der Länge der Impulsfolgen wächst, ist beispielsweise — wenigstens bei einer höheren Folgefrequenz der Taktimpulse — für acht Datentelegramme von jeweils 15 Bit ein derartiges Zeitmultiplex-Verfahren störanfällig. Störungen treten insbesondere beim Einlesen von Bytes in eine Rechenanlage auf, wenn diese Bytes von einer entfernten Sendestation bereitgestellt und über längere Übertragungsleitungen in einem höheren Übertragungstakt von einer an den Dateneingängen der Rechenanlage angeordneten, einen hochfrequenten Taktimpulsgeber enthaltenden Empfangsstation aus abgerufen werden.

Unter Verzicht auf ein zeitmultiplexes Verfahren geht die Erfindung von einem synchronen Verfahren aus, bei dem der Sender über eine Taktleitung die den Datenimpuls-Plätzen zugeordneten Taktimpulse aussendet und der Empfänger die Datenimpuls-Platzbelegung innerhalb der an seinem Datenleitungs-Anschluß empfangenen Datentelegramme im Takt der an seinem Taktleitungs-Anschluß anliegenden Taktimpulse abtastet.

Der Erfindung liegt dabei die Aufgabe zugrunde, dieses synchrone Übertragungsverfahren so auszugestalten, daß bei gegebenem Übertragungszyklus möglichst viele Daten übertragen werden können.

Insbesondere sollen die Daten aus einer Meßstation über längere Entfernungen zu einer diese Daten verarbeitenden Anlage übermittelt werden. Vorzugsweise soll die Datenübertragung über Lichtleiter erfolgen, um z.B. Meßwerte von einer auf Hochspannung liegenden Meßwertestation (z.B. Meßwandlern an der Spitze eines Hochspannungsmastes) zu einer galvanisch getrennten (z.B. am Hochspannungsmast-Fuß angeordneten) Auswerte-Elektronik optisch zu übertragen.

Zur Lösung dieser Aufgabe sieht die Erfindung vor, daß über die Taktleitung durch Telegramm-Pausen getrennte Takttelegramme und über die Datenleitung synchron mit den Takttelegrammen liegende Datentelegramme aussendet und der Empfänger den Beginn der Datentelegramme aus der Pause zwischen den Takttelegrammen erkennt. Er tastet dann den Inhalt des Datentelegramms synchron mit den Taktimpulsen ab. Die Synchronisierungs-Pause ist also nicht zwischen Datentelegrammen, sondern zwischen Takttelegrammen angeordnet. Jedes Takttelegramm beginnt mit einer konstanten Folge von Taktimpulsen und Taktpausen, so daß ein Erkennungscode für Kopf und Ende der Telegramme entbehrlich ist. Dadurch erhöht sich die Zahl der auf der Datenleitung mit Datenimpulsen belegbaren Datenimpuls-Plätze.

Solange jeder Datenimpuls-Platz jeweils einem Taktimpuls bzw. einer Taktimpulspause fest zugeordnet und synchron abgefragt wird, muß die Länge der Datentelegramme gleich der Takttelegramm-Länge sein. Diese ist jedoch nicht erforderlich, vielmehr können auch nach einem Takttelegramm-Ende weitere Datenimpuls-Plätze im Datentelegramm vorgesehen sein, die dann durch eine entsprechende Umsteuerung im Empfänger asynchron abgefragt werden können. Dadurch erhöht sich die Zahl der verfügbaren Datenimpuls-Plätze der Datenleitung, während gleichzeitig die erforderliche Synchronisierungspause über die Taktleitung erkennbar bleibt. Bei diese Variante wird also nur der erste Datentelegramm-Teil jeweils synchron mit den Taktimpulsen abgefragt. Die Anzahl der verbleibenden, asynchron abgetasteten Impuls-Plätze des Datentelegramms ist allerdings sehr beschränkt.

Eine derartige Umschaltung von synchroner auf asynchroner Steuerung der Abtastung kann auch angewendet werden, um die Taktleitung zur Übertragung von zusätzlichen Informationen zu nutzen. Unter Berücksichtigung der Mindestlänge der Synchronisierungspause und den für die sichere Erkennung des Telegramm-Anfangs erforderlichen Taktimpulsen konstanter Länge und Höhe verbleiben im Übertragungszyklus noch Impulsplätze im Takttelegramm, die entsprechend der Zusatzinformation mit Zusatzimpulsen frei belegbar sind. Im Sender braucht dann nur nach der zur Erkennung des Telegramm-Anfangs erforderlichen Anzahl von Taktimpulsen ("fester Takttelegramm-Teil") die synchrone Abtastung der Datentelegramme abgeschaltet und auf eine zeitgesteuerte, asynchrone Abtastung umgeschaltet werden, wobei dann die verbleibenden freien Takttelegramm-Teile (und gegebenenfalls die verbleibenden Daten-Telegramm-Teile) zeitgesteuert, d.h. asynchron, abgetastet werden.

Bei größeren Entfernungen zwischen Sendestation und Empfangsstation können jedoch, wie experimentell herausgefunden wurde, Laufzeiteffekte bereits die synchrone Aussendung und Abtastung mit den festen Takttelegramm-Teilen stören. Um dies zu vermeiden, werden die Taktleitung und die Datenleitungen annähernd parallel zueinander verlegt und die Telegramme werden, unabhängig vom Arbeitstakt einer die Daten verarbeitenden Anlage auf der Empfängerseite, auf der Takt- und den Datenleitungen von einem in der Sendestation angeordneten, eigenen Taktgeber gesteuert.

Für eine derartige Datenübertragung sieht die Erfindung ein Verfahren mit den Merkmalen des Anspruchs 3 und eine Vorrichtung mit den Merkmalen des Anspruchs 9 vor.

Vorteilhafte Weiterbildungen der Erfindung sind in den Unteransprüchen gekennzeichnet und werden anhand von acht Figuren näher erläutert. Es zeigen:

Figur 1 den allgemeinen Aufbau der Telegramme zur Parallelübertragung von fünf Datenwörtern,

Figur 2 und 3 zwei schematische Ausführungen der hierzu erforderlichen Sender und Empfänger,

Figur 4 und 5 eine vorteilhafte Anwendung der Erfindung und die übermittelten Telegramme,

Figur 6 eine schaltungstechnische Realisierung der Anordnung nach Figur 3 für eine einzelne Datenleitung,

Figur 7 und 8 die vom Sender bzw. Empfänger an den Leitungen und der Ablaufsteuerung auftretenden Impulse.

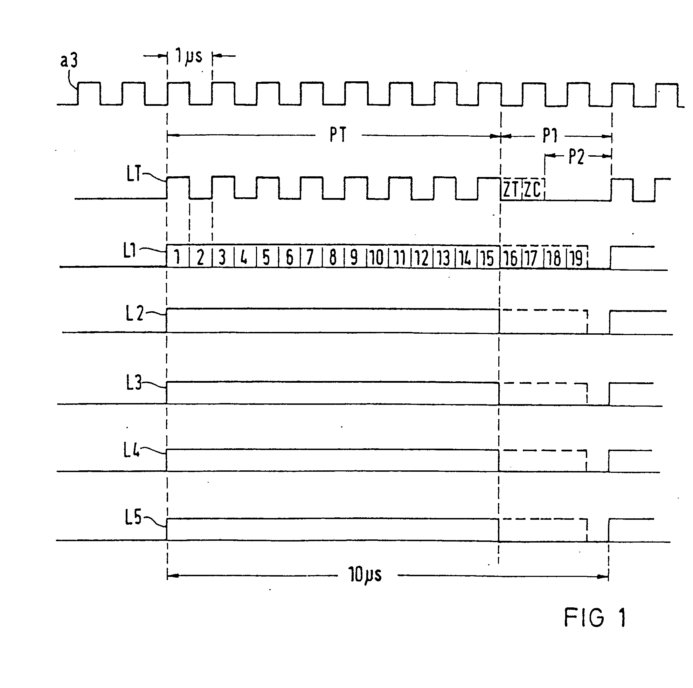

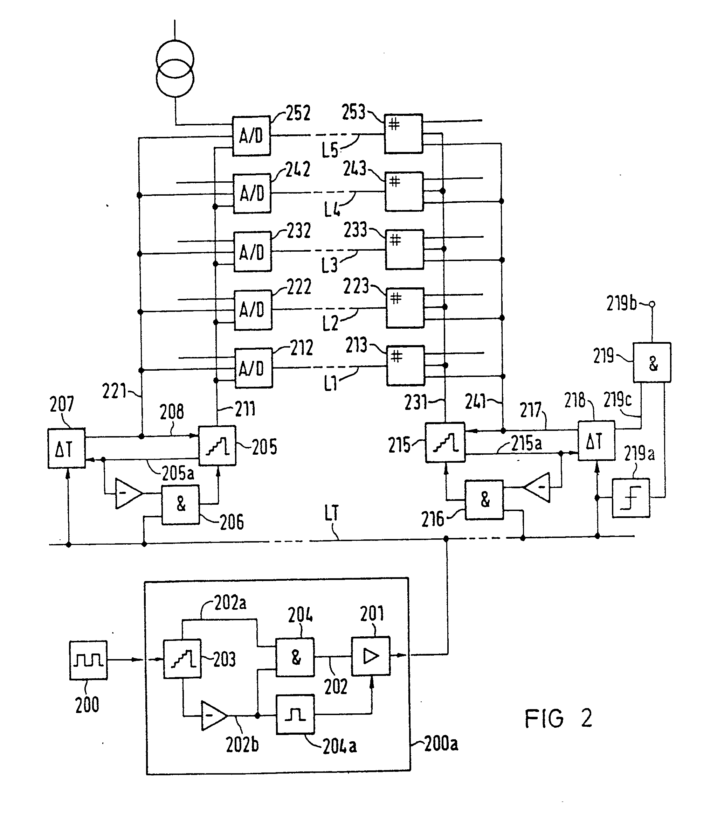

In Figur 1 ist mit a3 eine Impulsfolge dargestellt, die dem gewählten Übertragungstakt von 1 MHz entspricht. Diese Taktsteuer-Impulse eines Übertragungstaktgebers 200 (Fig. 2) steuern einen Taktimpulskoppler 200a, der für den gewählten Übertragungszyklus von 10 µ sec und die synchrone Übertragung von 15 Datenbits ausgelegt ist und jeweils acht Taktsteuer-Impulse (gegebenenfalls mit einer geringen, aber konstanten Zeitverzögerung) in eine Taktleitung LT einkoppelt und dann für eine Pause von 2,5 µ sec sperrt. Im folgenden sind Leitungen und die über diese Leitungen übertragenen Signale mit den gleichen Bezugszeichen versehen. Die über die Leitung LT übertragenen "Takttelegramme" beginnen also mit dem festen Takttelegramm-Teil PT, das durch eine im Übertragungstakt alternierenden Folge konstanter, mit a3 synchroner Taktimpulse mit einer Pause P1 vorgegebener Länge. Die Taktimpulse ZT und ZC seien zunächst nicht vorhanden.

Entsprechend enthält der Taktimpulskoppler 200a einen jeweils nach 10 Takten rücksetzbaren Zähler für die Taktsteuerimpulse a3, die jeweils über die Leitungen 202, 202a einen Verstärker 201 zum Einkoppeln von PT ansteuern, solange ein Gatter 204 nicht über eine nach dem achten Taktsteuerimpuls gebildetes Überlaufsignal 202b gesperrt wird.

Die zu übertragenden Bits werden von Datenquellen geliefert, die z.B. als Analog/Digital-Umsetzer 212, 222, 232, 242, 252 am Ausgang von Meßgliedern ausgebildet sein können und deren an einem seriellen Datenausgabe-Anschluß anstehenden Datenbits im Takt von Freigabesignalen (Leitung 211) nacheinander in die Datenleitungen L1, L2, L3, L4, L5 eingekoppelt werden. Bestehen alle Bytes nur aus "1"-Impulsen, so ergeben sich die Datentelegramme L1 bis L5 der Fig. 1 mit den Datenplätzen 1 bis 15, wobei die Datenplätze 16 bis 19 vorerst nicht vorhanden seien.

Das Auslesen der A/D-Umsetzer 212, ..., 252, d.h. die zeitliche Folge der Datentelegramme und Datenplätze, ist auf die Impulse des Takttelegrammes LT und somit auf die Taktsteuer-Impulse a3 mittels einer Impulssteuerung synchronisiert. Deren Ansteuerimpulse können direkt am Übertragungstaktgeber 200 oder am Taktimpulskoppler abgegriffen werden. Falls z.B. der Geber 200 gemäß Fig. 2 nicht in unmittelbarer Nähe der Datenquellen 212, ..., 252 angeordnet ist, kann die Impulssteuerung auch auf andere Weise mit Ansteuerimpulsen, die synchron zu den Impulsen des Takttelegramms gebildet werden, angesteuert werden. In Fig. 2 dient als Impulssteuerung ein Zähler 205 für die Impulsflanken der Taktimpulse, der mit seinem Zählertakt an der Leitung 211 ein Freigabesignal zum Auslesen des nächsten Bits aus den A/D-Umsetzern liefert und über eine Rücksetzleitung 208 rücksetzbar ist, um das Auslesen eines neuen Bytes freizugeben. Eine Überlaufleitung 205a und ein Gatter 206 dient — entsprechend den Elementen 202b und 204 — zum Verriegeln der Impulssteuerung während der Pause P1, während eine Zeitstufe 207 die Verriegelung nach der Pause P1 wieder aufhebt.

Auf der Empfangsseite ist eine die Datentelegramme abtastende, von den an der Taktleitung empfangenen Taktimpulsen getriggerte Abtasteinrichtung zur synchronen Abtastung der auf den Datenleitungen empfangenen Datentelegramme sowie eine Einrichtung zur Erkennung einer Telegramm-Pause vorgesehen. Wesentlich ist hierbei, daß die Einrichtung zur Erkennung der Telegramm-Pause an die Taktleitung angeschlossen ist.

Diese Pausenerkennungseinrichtung ist in Fig. 2 als eine Zeitsteuerung 217 symbolisiert, die an eine Abtaststeuerung angeschlossen ist. Entsprechend der Impulssteuerung 205, 205a, 206, 208 auf der Senderseite ist die Abtaststeuerung dargestellt als Zähler 215 mit einem Überlauf und einem Gatter 216 am Zählereingang, das an die Taktleitung angeschlossen ist und den von den Impulsflanken der Taktimpulse getriggerten, auch an der Leitung 231 anstehenden Zählertakt sperrt, sobald nach der für den festen Takttelegramm-Teil vorgesehenen Zahl von Taktimpulsen an der Leitung 215a ein Überlauf entsteht. Die Zeitsteuerung 217 selbst überwacht die Impulse auf der Taktleitung LT und gibt ein Rücksetzsignal für den Zähler, wenn eine eine vorgegebene Mindest-Synchronisierungspause P2 überschreitende Impulspause auftritt. Dadurch wird auf der Leitung 241 der von den Taktimpulsen getriggerte Zählertakt freigegeben, der jeweils als Einlesetakt den Dateneingang von Schieberegistern 213, 223, 233, 243, 253 zum seriellen Einlesen der Datentelegramme freigibt. Die Speicher enthalten somit am Ende des festen Takttelegramm-Teils die synchron abgetasteten Datenbits der übermittelten Bytes.

Da, wie aus Fig. 1 ersichtlich ist, zum Erkennen des Takttelegramm-Kopfes nur ein fester Takttelegramm-Teil PT mit einer vorgegebenen Anzahl von Impulsplätzen und zum Erkennen der Synchronisierungs-Pause nur die Impulspause P2 erforderlich sind, verbleiben noch frei belegbare Impulsplätze im Takttelegramm, über die Zusatzinformationen (z.B. ein Zusatzimpuls ZT zum Testen der Leitung LT und ein Kontrollimpuls ZC zum Überwachen der Versorgungsspannung des Taktimpulsgenerators 200a) übermittelt werden können.

Zum Einkoppeln dieser Zusatz-Impulse ist nach Fig. 2 vorgesehen, daß das Zeitglied 204a am Ende des festen Takttelegramm-Teils den Verstärker 201 mit Impulsen ansteuert, die z.B. einen Taktimpuls verminderter Pulshöhe auslösen. Diese wird dann, je nach Ansprechen eines Taktimpulsdetektors (Grenzwertmelder 219a), auf der Empfängerseite gemeldet oder unterdrückt, um eine Überwachung des Übertragungssystems zu ermöglichen.

Die Takttelegramm-Pause kann also, je nach Belegung der freien Zusatz-Impulsplätze, zwischen der Mindest-Synchronisierungs-Pause P2, die vom Taktimpulskoppler 200a in keinem Fall belegt und von der Pausenerkennungseinrichtung 217 überwacht wird, und der Signalpause P1 zwischen den festen Takttelegramm-Teilen PT schwanken. Im Empfänger werden die mit den empfangenen Taktimpulsen getriggerten Abtastimpulse auf der Leitung 241 am Ende des festen Takttelegramm-Teils gesperrt. Zur Erfassung des freien Takttelegramm-Teils erzeugt dann die Pausenerkennungseinrichtung mittels entsprechender Zeitstufen zeitlich gesteuerte Abtastimpulse, die über die Leitung 219c ein Gatter 219 ansteuern, das die Signale des Detektors 219a auf eine Fehleranzeige 219b durchschaltet.

Dadurch wird ein Empfänger am Ende des für eine synchrone Abtastung der Datentelegramme benötigten festen Takttelegramm-Teils auf eine asynchrone Abtastung der verbleibenden freien Takttelegramm-Teile umgeschaltet.

Für die Erkennung des Telegramm-Anfanges ist nur erforderlich, daß das Takttelegramm mit einem sicher erkennbaren festen Takttelegramm-Teil beginnt. Daher können freie Takttelegramm-Teile auch im Inneren der Takttelegramme vorgesehen sein. Außerdem können während des freien Takttelegramm-Teiles (und sogar noch während der Takttelegramm-Pausen) Datenimpulse übertragen und asynchron abgetastet werden, wie mit den Impulsplätzen 16 bis 19 der Fig. 1 angedeutet ist.

Ein besonders Anwendungsgebiet sind Fälle, in den eine hohe Übertragungsfrequenz oder Isolationsprobleme eine Datenübertragung über Lichtleiter und längere Strecken erforderlich machen.

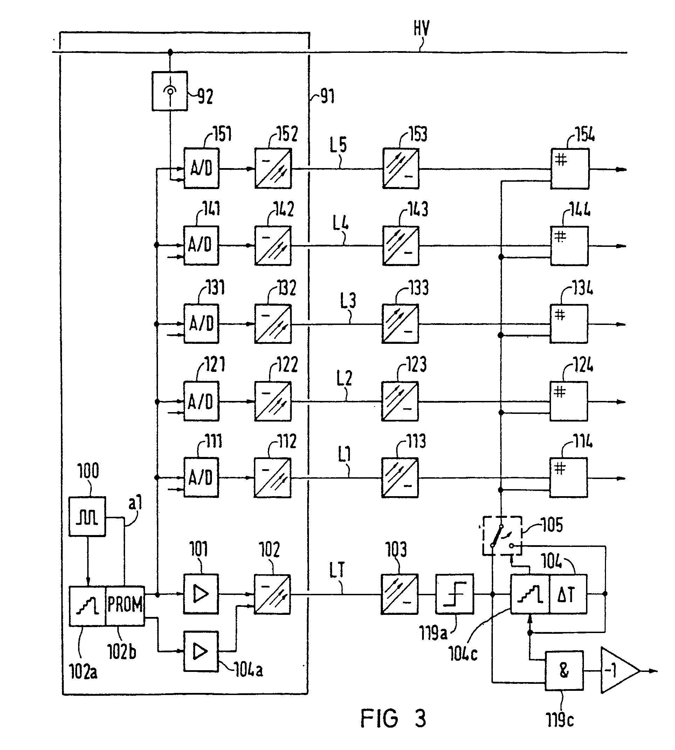

In Figur 3 ist angenommen, daß für die Steuerung bestimmter Vorgänge an einem Hochspannungsnetz HV Meßwerte abgegriffen und in einer (nicht dargestellten) Elektronik verarbeitet werden müssen. Da die Steuerelektronik zugänglich und auf Erdpotential liegen sollte, ist vorgesehen, die erforderlichen Meßdaten über Lichtwellenleiter LT, L1, ..., L5 von der Meßstation aus zu übertragen, die in diesem Fall stets als Sender arbeitet.

Mit 92 ist z.B. ein Spannungswandler mit einem daran angeschlossenen Analog/Digital-Umsetzer 151 bezeichnet, die ein Meßglied mit einem Ausgang zur seriellen Datenausgabe bilden, deren Daten in einer angeschlossenen steuerbaren Lichtquelle 152 auf die Datenleitung L5 eingekoppelt werden. Für die weiteren Leitungen L1 bis L4 bilden entsprechende Umsetzer 111, 121, 131, 141 und Lichtquellen 112, 122, 132, 142 die jeweiligen Datenquellen, die an weitere (nicht dargestellte) Meßgeber angeschlossen sind. An den Lichtwellenleiter LT ist eine weitere Lichtquelle 102 angeschlossen, die von einem Treiber 101 gespeist ist und dem Verstärker 201 im Taktimpulskoppler 200a der Figur 2 entspricht. Der Übertragungstakt wird von einem Geber 100 geliefert und als Impulssteuerung ist im wesentlichen ein vom Übertragungstakt-Geber 100 getakteter programmierter Speicher vorgesehen, der in Figur 3 durch einen bereits bei Figur 2 besprochenen Zähler 102a zur Adressierung eines PROM 102b dargestellt ist.

Übertragungstakt-Geber, Taktimpulskoppler und alle restlichen Teile des Senders sind in einem gegen Erdpotential nicht geerdeten Gehäuse 91, z.B. auf einer Plattform an der Spitze eines Hochspannungsmastes angeordnet, während die Lichtleiter zu einem Empfänger auf der Bodenstation führen.

Den empfangsseitigen, von der Abtaststeuerung getriggerten Schieberegistern 213, ..., 253 der Figur 2 entsprechen die Speicher 114, ..., 154 der Figur 3, deren Dateneingänge lichtempfindliche Empfänger 113, ..., 153 vorgeschaltet sind. Ein derartiger Empfänger 103 ist auch an den Lichtwellenleiter LT für die Taktimpulse angeschlossen.

Vereinfachend dargestellt liefert der Geber 100 einen hochfrequenten Arbeitstakt a1 für den vom Zähler 102a adressierten Speicher 102b sowie durch Herunterteilen einen Zählertakt a2 mit doppelter Übertragungsfrequenz (a2 = 2 . a3). Zur synchronen Einkopplung des festen Takt-Telegramm-Teils PT sowie der Datentelegramme L1 bis L5 während der ersten acht Übertragungstakt-Perioden (fester Takttelegramm-Teil) steuert das PROM mit dem Übertragungstakt a3 den Taktimpulskoppler 101, 102 und taktet mit dem Zählerstand a2 die Datenquellen zur Freigabe der Datentelegramm-Einkopplung. Die Analog/Digital-Wandler steuern daher bitweise die Lichtquellen im Takt der Impulsflanken dieser konstanten Taktimpulse.

Die Taktimpulse werden im Empfänger empfangen, der entsprechend dem Zähler 215 und der Pausenerkennungs-Einrichtung 217 der Figur 2 als ein über den optoelektrischen Empfänger 103 und den Grenzwertmelder 119a an die Taktleitung angeschlossenes, kombiniertes Zähler/Zeitüberwachungs-Glied 104, 104e dargestellt ist.

Anstelle des Logikgatters 216 aus Fig. 2 ist in Figur 3 schematisch ein Schalter 105 dargestellt. Er ist vom Bauglied 104 betätigbar, das durch Zählen der empfangenen, konstanten Taktimpulse des festen Takttelegramm-Teils PT deren Ende feststellt und die an der Lichtquelle 103 abgegriffenen Abtast-Impulse vom Triggereingang der Speicher 114,..., 154 abtrennt. Die Anordnung ist also während des festen Takttelegramm-Teils PT zur synchronen Übertragung der Daten-Telegramme und der entsprechenden Taktimpulse ausgelegt.

Mit dem frei belegbaren Taktimpuls-Platz ZT im Takttelegramm soll das optische Übertragungssystem für die Takttelegramme überprüft werden, wie dies im Prinzip aus der DE—OS 34 14 395 bekannt ist.

Dazu gibt der PROM 102b in der auf den festen Takttelegramm-Teil PT folgenden Halbperiode des Zählertaktes ein Ansteuersignal auf den Treiber 104a, der somit entsprechend dem Zeitglied 204a der Figur 2 einen Zusatz-Taktimpuls steuert. Jedoch wird die Sendeleistung dieses Zusatz-Taktimpulses kleiner gewählt als die Sendeleistung der konstanten Taktimpulse. Der Empfänger tastet über den Grenzwertmelder die Lichtintensität der empfangenen Taktimpulse ab.

Daher kann auf das ordnungsgemäße Arbeiten der optischen Taktimpulsübertragung geschlossen werden, wenn an einem vom Zeitüberwachungsglied 104 freigegebenen Gatter 119c eine Meldung auf dem Takttelegramm-Platz ZT ansteht. Bei Alterungen oder Störungen des Übertragungssystems werden zunächst die Zusatzimpulse ZT im Impuls-Telegramm verschwinden, während noch eine ordnungsgemäße Übermittlung der konstanten Takt-Telegramm-Teile (also der zur synchronen Abtastung benötigten Taktimpulse) gewährleistet ist. Bei einem entsprechenden Überwachingssignal muß daher noch nicht sofort das Übertragungssystem ausgebessert werden, vielmehr braucht dies erst bei der nächsten routinemäßigen Wartung zu erfolgen.

Während bisher angenommen wurde, daß die Datentelegramme sich nur über die Impuls-Plätze 1 bis 15 der Figur 1 erstrecken, sollen jetzt auch außerhalb des festen Takttelegramm-Teils Datenimpulse gesendet und abgetastet werden. Die Belegung dieser Zusatz-Datenplätze kann im Sender auf einfache Weise dadurch geschehen, daß der Zähler takt a2 vom PROM 102b an die Triggereingänge der Umsetzer 111,..., 151 gegeben wird, bevor der Zähler nach jeweils 20 Zählertakten wieder auf den Telegramm-Anfang rückgesetzt wird. Zum Abtasten dieser zusätzlichen Datenimpuls-Plätze erzeugt das Zeitsteuerglied 104 entsprechende zeitgesteuerte Abtastimpulse, die vom Umschalter 105 auf die Abtasteinrichtungen durchgeschaltet werden.

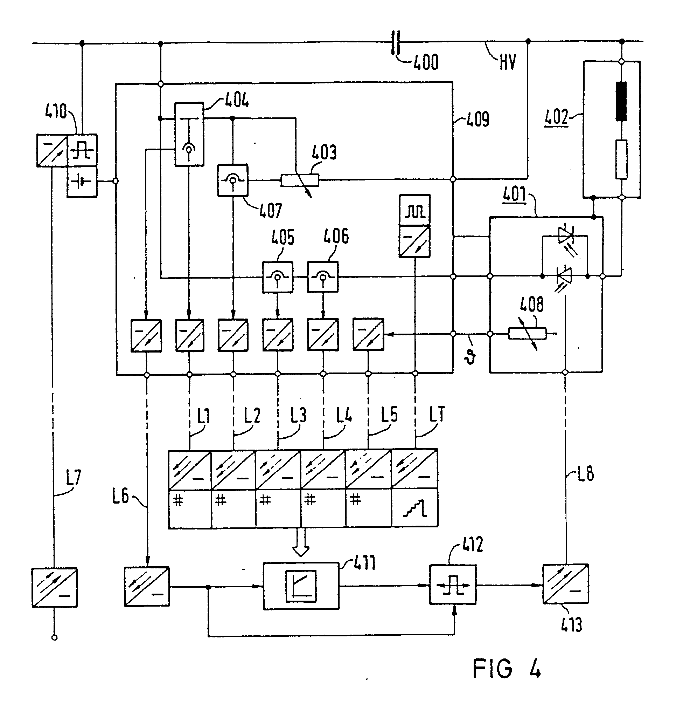

Der besondere, in Figur 4 gezeigte Ausführungsfall betrifft einen Streckenabschnitt einer Hochspannungsleitung HV, in die zur Längskompensation eine Induktivität 400 geschaltet ist. Um subsynchrone Resonanzen zu dämpfen, wie dies· z.B. in der US—PS 4 331 882 beschrieben ist, ist die Kapazität 400 über einen Thyristorschalter 401 und eine Dämpfungsimpedanz 402 zu Zeitpunkten kurzschließbar, zu deren Bestimmung der zeitliche Verlauf des über den Schalter fließenden Stromes und der Kondensatorspannung sowie deren Nulldurchgänge erfaßt werden müssen. Daher sind über einen Spannungsteiler 403 mit dem Meßwandler 404 sowie über Strom-Meßwandler 405 und 406 mit unterschiedlichen Meßbereichen die Ströme gemessen. Hinzu kommt ein Wandler zur Messung des Fehlerstromes 407 sowie eine Erfassung der thermischen Belastung des Thyristorschalters durch das Meßglied 408 zur Messung der Thyristortemperatur.

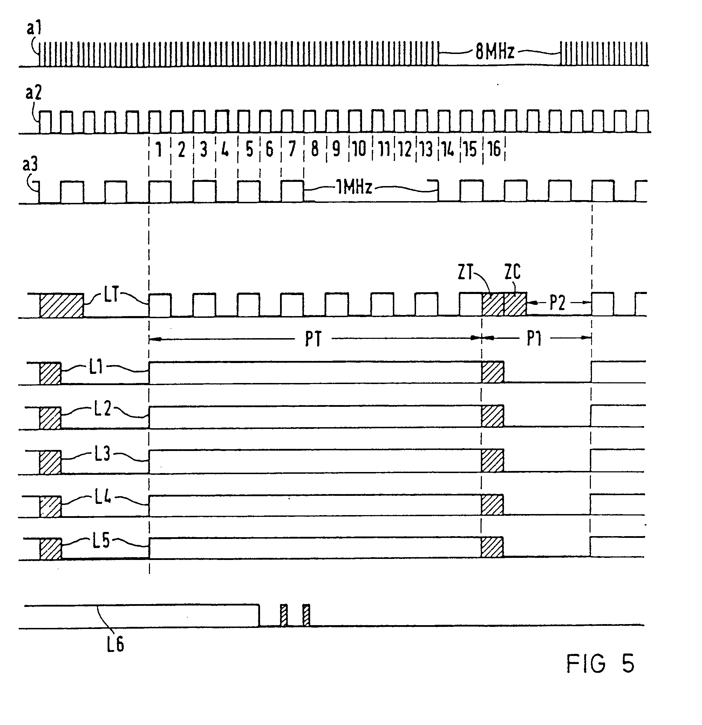

Die Ausgangssignale dieser Meßglieder sollen zusammen mit ihrem Vorzeichen als 12-Bit-Wort mit einem durch die zeitliche Auflösung von 10 µ sec gegebenen Übertragungszyklus übermittelt werden, so daß in den Datentelegrammen die in Figur 5 gezeigten Impuls-Plätze 1 bis 12 für diese Bytes vorhanden sein müssen. Zur Kontrolle des Telegramminhalts ist ein Paritätsbit mit Platz 13 vorgesehen. Zur Speisung der Meß- und Sendegeräte ist ein Netzgerät 410 aus einer Batterie und einem Batterieladegerät erforderlich, dessen einwandfreies Arbeiten jeweils durch eine Überwachungssignal für Überspannung und Unterspannung der Batterie kontrollierbar ist. Ferner sind drei weitere Überwachungssignale vorgesehen, um die Spannungsversorgung der Stromwandler, den Ausfall eines Temperatursensors und die Spannungsversorgung der Elektronik zu erfassen. Jeweils ein Signal einer entsprechenden (nicht dargestellten) Überwachung-Einrichtung ist jeweils als 14. Bit an die Meßdaten angehängt.

Aus den empfangenen Daten bildet die Bodenstation in einer Regeleinrichtung 411 und einem entsprechenden Steuersatz 412, zu dessen Steuerung über eine Leitung L6 die Spannungs-Nulldurchgänge zur Verfügung gestellt werden, die Thyristor-Zündimpulse, die über eine Lichtquelle 413 und die Fasern eines Lichtwellenleiter L8 den lichtzündbaren Thyristorschalter 401 zünden.

Für die Betätigung des Netzgerätes ist vorgesehen, über eine Leitung L7 entsprechende Steuerimpulse von der Bodenstation zum Sender zu übermitteln. Die Leitungen L7 und L8, die einer Übertragung zum Sender dienen, greifen aber in den Vorgang der hochfrequenten Datenübertragung ebensowenig ein wie die Leitung L6, die kein Hochfrequenzssignal überträgt. Für die hochfrequente Datenübertragung zwischen dem Sender und dem Empfänger stehen also nur die Datenleitungen L1 und L5 zur Verfügung, deren gute Ausnützung Gegenstand der Erfindung ist. Die gewünschte Übertragungsfrequenz von 1 MHz (wobei jeder Taktperiode zwei Daten-Plätze entsprechen) erfordert ein synchrones Übertragungsverfahren, wozu zusätzlich lediglich die Taktleitung LT mit dem entsprechenden Taktimpulskoppler vorgesehen sind.

Die Verwendung von Lichtwellenleitern gemäß der Erfindung ermöglicht nun die nochfrequente Übertragungsfrequenz, ohne daß Isolationsprobleme zwischen dem in einem ungeerdeten Gehäuse 409 angebrachten Sender und dem Empfänger auf der Bodenstation entstehen. Zur erwähnten, vorteilhaften Kontrolle des aus Lichtquelle, Lichtwellenleiter und optoelektronischem Empfänger bestehenden Übertragungssystems ist in jedem Daten-Telegramm der Platz 15 vorgesehen, um einen Datenimpuls mit einer gegenüber der normalen Übertragungsleistung verringerten Sendeleistung einzukoppeln, dessen Intensität vom Empfänger als Maß für die Güte des optischen Übertragungssystems überwacht wird.

Ein weiterer Datenplatz 16 dient der Übertragung weiterer Überwachungssignale aus dem Sender. Dabei ist angenommen, daß zwischen Sender und Empfänger eine Zwischenstation (Repeater) zur Verstärkung der optischen Impulse angeordnet ist, wobei diese Überwachungssignale dort zu einem niederfrequenten Alarmsignal zusammengefaßt und ohne Isolationsprobleme über eine konventionelle Leitung zum Empfänger übertragen werden. Platz 16 kann dann — ebenso wie der Impulsplatz ZC des Takttelegrammes — für einen Testimpuls zur Überprüfung der optischen Übertragung zwischen Repeater und Empfänger genutzt werden.

Zwei derartige Testimpulse sind auch im Nulldurchgangs-Signal auf Leitung L6 vorgesehen, so daß sich die Impulsdiagramme der Fig. 5 ergeben. Während der Dauer PT werden dabei Datentelegramme und fester Takttelegramm-Teil synchron ausgesendet und abgetastet, während die schraffierten Zusatz-Impulse asynchron abgetastet werden.

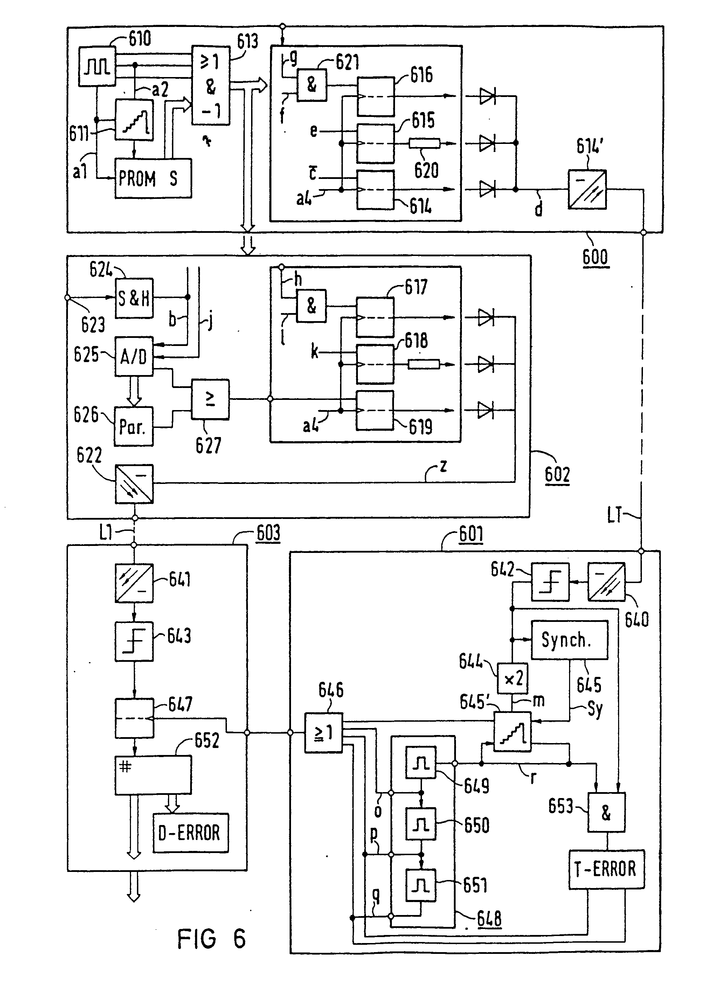

Eine genauere Darstellung der Vorrichtung zeigt Fig. 6, wobei die Baugruppen 602 und 603, die zum Senden und Empfangen der Datentelegramme L1 bis L5 fünfmal vorhanden sind, nur einmal gezeigt sind, während die dem Takttelegramm LT zugeordneten Sendeteile 600 und Empfangsteile 601 nur einfach vorhanden sind.

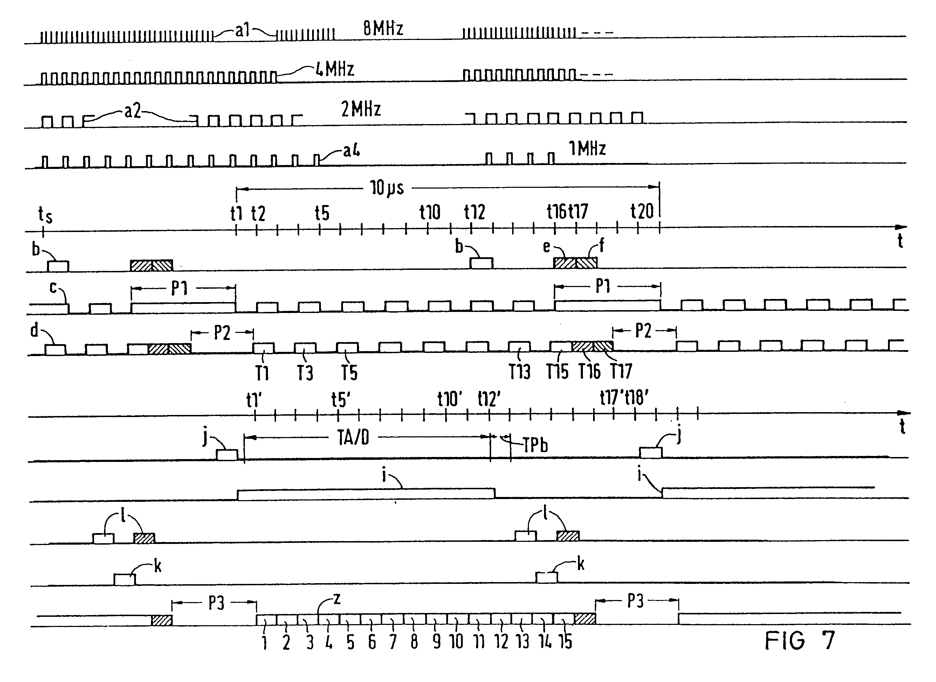

Ein Quarzoszillator 610 mit einer nachgeschalteten Frequenzteilerschaltung erzeugt eine 8-MHz-Frequenz a1, die in Figur 7 dargestellte 4-MHz-Frequenz und die 2-MHz-Frequenz a2 sowie durch logische Verknüpfung eine 2-MHz-Folge a4 aus schmalen Impulsen. Die Impulsbreite dieser schmalen Impulse kann durch Verknüpfung mit der 8-MHz-Frequenz, die auch als interner Arbeitstakt einem Zähler 611 und einem programmierbaren Speicher "PROM S" für den Sendeablauf zugeführt ist, noch weiter verringert werden. Das im programmierbaren Speicher enthaltene Programm liefert am Datenausgang 612 Signale, die über eine Logikschaltung 613 mit den Signalen des Oszillators 610 verknüpft werden. Die Programmierung des "PROM S" und der Aufbau der Logikschaltung wird anhand der Impulse der Figur 7 so erläutert, daß ihre Ausführung für den Fachmann selbstverständlich ist.

Der Zähler zählt, beginnend zum Zeitpunkt ts, die Impulse des 2-MHz-Taktes a2 jeweils bei steigender Flanke des 4-MHz-Taktes. Der Zählertakt ist also gegenüber dem 2-MHz-Takt a2 zeitverschoben. Der Zeitpunkt ts wird durch Rücksetzen des Zählerstands nach zwanzig Zählertakten bestimmt (Impuls b). Der mit dem Zählerstand adressierte Speicher erzeugt das Synchronisiersignal c, dessen Impulsflanken bei den Zeitpunkten t1 bis t16 mit den Anstiegsflanken des Zählertaktes übereinstimmen. Zwischen t16 und t20 ist aber eine Signalpause P2 eingehalten. Ein mit a4 getriggertes D-Flip-Flop 614 erzeugt aus dem zu c inversen Signal C̄ die Impulsfolge d aus den Taktimpulsen T1, T3, T5, . . ., T15, die als konstante Taktimpulse den festen Takt-Telegramm-Teil PT der Figuren 1 und 5 bilden und die Lichtquelle 615 steuern.

Diese konstanten Impulse sind also während der Signalpause P2 gesperrt, weisen aber während der Dauer des konstanten Takttelegramm-Teils PT gegenüber mit dem Zählertakt bzw. a2 nur eine konstante Zeitversetzung auf, sind also "synchron".

Zu den Zeitpunkten t16 und t17, an denen das Synchronisiersignal c bereits auf dem Pausenzustand ist, werden vom PROM S jeweils für die Dauer eines Zählertaktes Signale e und f ausgegeben. Mit dem Signal e wird über das D-Flip-Flop 615 ein erster Zusatz-Taktimpuls T16 auf die Lichtquelle 615 gegeben, die z.B. eine Lumineszenz-Diode sein kann, wobei die erforderlichen Einrichtungen zur Steuerung des Diodenstroms in Figur 6 nicht dargestellt sind. Mit 620 sind jedoch Bauelemente symbolisiert, mit denen der Diodenstrom und somit die Sendeleistung der jeweiligen Lichtimpulse gegenüber der Intensität der von den anderen D-Flip-Flops getakteten Lichtimpulse herabgesetzt wird. Die D-Flip-Flops 615 und 618 erzeugen somit jeweils einen Testimpuls, mit dem die Güte des optischen Übertragungssystems überwacht wird.

An der Leitung g liegt ein zusätzliches Überchungssignal an, das über eine Verriegelung 621 mit dem Impuls f freigegeben wird. Dadurch erzeugt das D-Flip-Flop 616 einen weiteren, in den freien Takttelegramm-Teil einkoppelbaren Zusatz-Taktimpuls. Im Impulsdiagramm d der von der Lichtquelle ausgesendeten Lichtimpulse sind neben den konstanten Taktimpulsen T1, T3, T5, . . ., T15 des festen Takttelegramm-Teils die schraffierten Zusatz-Impulse T16, T17 des freien Takttelegramm-Teils erkennbar.

Mit z ist in Figur 7 ferner das Diagramm der von der Lichtquelle 622 in die Datenleitung L1 eingekoppelten Daten-Telegramme dargestellt. Diese enthalten die zum festen Takttelegramm-Teil synchronen Datenplätze 1 bis 15 sowie einen schraffiert dargestellten Zusatz-Datenimpuls, wobei die Plätze 1 bis 12 den Bits eines an einem Meßwert-Eingang 623 anliegenden Bytes und Platz 13 dem Paritätsbit dieses Bytes reserviert ist, während auf Platz 14 der Zustand eines Überwachungssignals h und auf Platz 16 ein weiteres Überwachungsbit (zu deren Erzeugung keine weiteren Einzelheiten hier dargestellt zu werden brauchen) übermittelt werden sollen. Platz 15 dient der besprochenen Einkopplung eines Testimpulses verminderter Sendeleistung zur Überprüfung des optischen Übertragungssystems.

Um dieses Daten-Telegramm zu erzeugen, wird noch während der Takttelegramm-Pause mit der Abschlußflanke des letzten Zählertaktimpulses j (Zeitpunkt t1) ein Freigabesignal i gesetzt, das zum Zeitpunkt t13 mit der Abschlußflanke des Impulses b rückgesetzt wird. Der während des Impulses j am Meßwerteingang 623 anliegende Wert wird für die Dauer des Impulses i im Sample & Hold-Verstärker 624 gespeichert und steht am Eingang eines Analogs/Digital-Umsetzers 625 zur Verfügung, dessen Arbeitstakt ebenfalls durch das Freigabesignal i freigegeben wird. Mit TA/D ist der Auslesezyklus am seriellen, über ein ODER-Gatter 627 an den Eingang des Flip-Flops 619 gelegten Umsetzer-Ausgangs bezeichnet, wobei am Ausgang dieses Gatters jeweils bei den aufsteigenden Flanken des Taktes a2, also zu den Zeitpunkten t1',..., t12' das jeweilige Bit anliegt und über das Triggersignal a4 an den Steuereingang der Lichtquelle 623 gelegt wird. Da alle Lichtquellen des Senders von Flip-Flops gesteuert werden, die vom gleichen Signal a4 getriggert sind, ist im Sender die synchrone Einkopplung der Taktimpulse und Datenimpulse sichergestellt.

An den Parallelausgang des Umsetzers 625 ist ferner ein Paritätsgenerator 626 angeschlossen, der während des Taktes TPb im Anschluß an das serielle Auslesen ein entsprechendes Paritätsbit über das ODER-Gatter 627 dem Flip-Flop 619 aufschaltet.

Zu den Zeitpunkten t14, t15 und t16 sind über die Zählertakt-Impulse k und l und das PROM S auf die bereits besprochene Weise die restlichen Daten-Telegramm-Plätze mit Test- und Überwachungsbits belegbar.

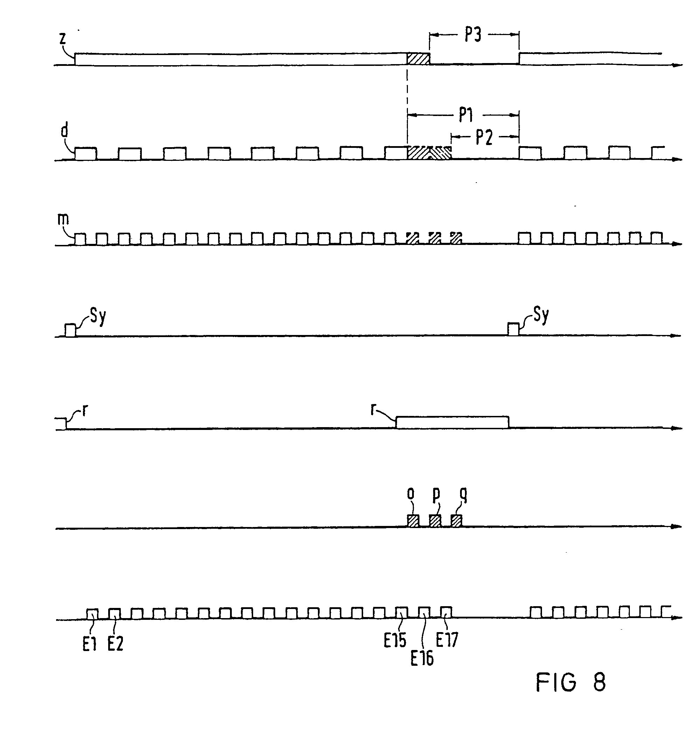

Auf der Empfängerseite der Datenleitung LT ist ein Detektor (lichtempfindliches Element 640, Grenzwertmelder 642) mit einer Zeitstufe 644 angeordnet, die jeweils bei einer Flanke von d einen Impuls von 0,5 μ sec erzeugt (Impulse m, Fig. 8). Es handelt sich also um eine Frequenzverdopplung, wobei entsprechend der Impulsbelegung des freien Telegramm-Teils mindestens einer der gestrichelt dargestellten Impulse vorhanden ist. Eine an den Taktimpuls-Detektor angeschlossene Pausenerkennungs-Einrichtung 645 erzeugt einen Abtast-Synchronisierungsimpuls Sy, sobald auf der Taktleitung eine Telegramm-Pause von mindestens 1,25 μ sec (entsprechend P2 = 1,5 μ sec) auftritt. Mit diesem Signal wird der Eingang eines Zählers 645 für die Impulse m freigegeben, der nach der für den festen Takttelegramm-Teil vorgegebenen Anzahl von 15 Zählertakten ein Überlaufsignal r erzeugt, das den Zählereingang wieder sperrt. Der Zählerstand selbst wird mit dem ersten Zählimpuls auf Null gesetzt.

Der Zählertakt am Eingang des Zählers 645 enthält daher nur die Impulsfolgen der durchgelassenen Zählerimpulse. Diese dienen nach Durchlaufen eines ODER-Gatters 646 dazu, mit ihren fallenden Flanken ein D-Flip-Flop 647 für die vom Datenimpuls-Detektor 641, 643 gebildeten Signale zu triggern. Dadurch wird das Daten-Telegramm z für die Dauer des festen Takttelegramm-Teils synchron abgetastet und am Flip-Flop 647 entstehen zunächst die abgetasteten Impulse E1 bis E15. Ein weiteres synchrones Abtasten der Datentelegramme ist über die Zählersperre r verhindert. Mit dem Überlaufsignal r werden aber in einer Zeitsteuerung 448 Zeitstufen 449, 450 und 451 angestoßen, die mit einer vorgegebenen Verzögerung und Pulsdauer die Ausgangsimpulse o, p und q abgeben. Dadurch werden die Impulse n, die von den Impulsen d des festen Takttelegramm-Teils getriggert sind, im 2-MHz-Takt zeitgesteuert fortgesetzt. Durch Einkoppeln über das ODER-Gatter 646 wird bewirkt, daß nunmehr auch der Zusatz-Datenplatz 16 mit einem entsprechenden Abtastimpuls E16 (und darüber hinaus noch anschließende, bei Übermittlungs-Fehlern in die Datentelegramm-Pause P3 fallende Impulse) abgetastet werden.

Das serielle Datentelegramm wird mit Hilfe einer (Flip-Flop-Schaltung 647) in ein paralleles Datenwort umgesetzt. Das 12-Bit-Wort und das Paritätsbit wird in einem Zwischenspeicher eingelesen, die restlichen Bits einer Fehlerauswertung "D-ERROR" zugeführt. So kann das Paritätsbit auf Platz 13 dazu verwendet werden, um bei einem Paritätsfehler (oder auch beim Auftreten eines Bits auf dem für das Datentelegramm nicht zugelassenen Platz E17) einen Fehler bei der Datenübertragung anzeigen. Dann muß eine Auswertung des übertragenen Meßwertes unterdrückt oder bei einer Mäufung derartiger Fehler die gesamte Anlage stillgesetzt werden. Ein fehlender Impuls für das Testbit auf Platz 15 zeigt ein Nachlassen der optischen Übertragungseigenschaften an, bei dem noch keine Störung des Systems unmittelbar bevorsteht; der entsprechenden Fehlermeldung kann daher eine niedrigere Priorität zugeordnet werden. Entsprechend können auch die übrigen, jeweils bestimmten Überwachungseinrichtungen zugeordneten Zusatz-Datenimpulse bewertet und in der Fehleranzeige zu entsprechenden Sammelalarmen weiterverarbeitet werden.

Die Impulse a, p und q der Zeitsteuerung 448 stehen aber nicht nur für die beschriebene Asynchronauswertung der Datentelegramme, sondern auch für die Auswertung der freien Takttelegramm-Teile zur Verfügung. Hierzu werden die Ausgänge des Takttelegramm-Detektors 640, 642 an einem UND-Gatter mittels des Überlauf-Signals r freigegeben und einer Takt-Fehleranzeige "T-ERROR" zugeführt. Auf diese Weise kann der freie Takttelegramm-Teil mit den Abtastimpulsen E16 und E17 abgefragt und aus den Zusatz-Taktimpulsen eine entsprechende Fehlermeldung abgeleitet werden.

Gemäß der Erfindung ist also die Taktleitung mit einer Takttelegramm-Folge belegt, die entsprechend einem asynchronen Verfahren Mindestpausen sowie feste, auf die Erkennung von Telegramm-Kopf und -ende programmierte Takttelegramm-Teile aber auch frei belegbare Takttelegramm-Teile enthält. Dadurch kann auch die Taktleitung für eine Informationsübertragung genutzt werden.

Für die Datenleitung sieht die Erfindung vor, zwischen einer auf die festen Takttelegramm-Teile synchronisierten Abtastung und einer asynchronen Abtastung während der freien Takttelegramm-Teile und der Taktpausen umzuschalten, so daß die Datenleitung praktisch ununterbrochen für eine Datenübertragung zur Verfügung steht. Damit sind alle Datenleitungen, die für einen Schnelle, hochfrequente Datenübertragung zur Verfügung stehen, optimal genutzt. Dabei können auch Lichtwellenleiter auf einfache Weise eingesetzt und überwacht werden.

## Patentansprüche

1. Verfahren zur Datenübertragung zwischen zwei Datenstationen, wobei über eine Taktleitung mit einem festen Takttelegramm-Teil (PT) beginnende, durch eine Telegramm-Pause (P2) voneinander getrennte Takttelegramme und über eine Datenleitung synchron mit den Takttelegrammen beginnende Datentelegramme (L1 bis L5) übermittelt werden und jedes Datentelegramm während der festen Takttelegramm-Teile (PT) synchron mit den Taktimpulsen (LT) des Takttelegramms abgetastet und während freier Takttelegramm-Teile und Takttelegramm-Pausen (P2) mittels einer Zeitsteuerung, die nur während fester Takttelegramm-Teile durch auf der Taktleitung empfangene Impulse synchronisiert wird, unsynchronisiert abgetastet wird.

2. Verfahren nach Anspruch 1, dadurch gekennzeichnet, daß auch das Takttelegramm während freier Takttelegramm-Teile unsynchronisiert abgetastet wird.

3. Verfahren zur Datenübertragung über annähernd parallel verlegte Übertragungsleitungen zwischen einer Sendestation und einer entfernt angeordneten Empfangsstation zur Verarbeitung der übertragenen Daten, wobei

a) der Sender in jedem Übertragungszyklus zur Bildung eines Takttelegrammes nach einer Telegrammpause einen festen Takttelegramm-Teil aus einer in einem Übertragungstakt alternierende Folge (PT) konstanter Taktimpulse erzeugt,

zur Bildung synchroner Datentelegramme, deren Datenplätze (1—15) mit Datenimpulsen frei belegbar sind, mittels jeder Impulsflanke der Taktimpulse den nächsten Datenplatz jedes Datentelegramms ansteuert und den zu übertragenden Daten entsprechenden Datenimpulse erzeugt,

im Übertragungstakt nach einem festen Takttelegrammteil die Belegung eines oder mehrerer Datenplätze im Datentelegramm und/oder im Takttelegramm mit Zusatzimpulsen steuert,

das Takttelegramm in eine Taktleitung und jedes der mehreren Datentelegramme in eine eigene Datenleitung einkoppelt, und

bei jeder Telegrammpause die Ansteuerung für die Datenplätze der Datentelegramme rücksetzt und die Einkopplung von Impulsen in die Taktleitung sperrt, und

b) ein Empfänger

aus der Telegramm-Pause auf der Taktleitung den Beginn der Daten-Telegramme erkennt und nach dem Pausenende die Impulsbelegung auf den Datenleitungen synchron mit den auf der Taktleitung empfangenen Taktimpulsen abtastet und

nach dem Ende des festen Takttelegramm-Teils auf eine zeitgesteuerte Abtastung der Zusatzimpulse, die nur während fester Takttelegramm-Teile durch auf der Taktleitung empfangene Impulse synchronisiert wird, umschaltet.

4. Verfahren nach einem der Ansprüche 1 bis 3, dadurch gekennzeichnet, daß der Sender die Datenplätze der Datentelegramme jeweils durch eine Halbperiode des Übertragungstaktes bestimmt.

5. Verfahren nach Anspruch 3, dadurch gekennzeichnet, daß der Empfänger durch Zählen der konstanten Taktimpulse des festen Takttelegramm-Teils deren Ende feststellt und eine Zeitsteuerung auslöst, die in einem vorgegebenen Takt Tastimpulse für die Abtastung der Zusatzimpulse bildet.

6. Verfahren nach Anspruch 3, dadurch gekennzeichnet, daß die Datenimpulse und die Taktimpulse jeweils über ein optisches Übertragungssystem aus einer steuerbaren Lichtquelle im Sender, einem Lichtwellenleiter als Datenleitung bzw. Taktleitung und einem lichtempfindlichen elektrischen Bauelement übertragen werden und daß zur Überwachung des optischen Übertragungssystems unabhängig von den auf der Datenleitung zu übertragenden Daten auf einem vorbestimmten Platz eines Daten-Telegramms und auf einem vorbestimmten, außerhalb des festen Takttelegramm-Teils liegenden Platz des Takttelegramms jeweils ein Lichtimpuls verminderter Sendeleistung übertragen und das diesem vorbestimmten Platz zugeordnete Ausgangssignal des Bauelementes überwacht wird.

7. Vorrichtung zur Datenübertragung zwischen einer Sendestation und einer davon entfernten Empfangsstation zur Weiterverarbeitung der Daten mit

a) einem von einem Übertragungstaktgeber (100) gesteuerten Taktimpulskoppler in der Sendestation (102a, 101, 102) zur Einkopplung einer im Übertragungstakt alternierenden Folge von konstanten Taktimpulsen in eine Taktleitung (LT), wobei während einer Signalpause vorgegebener Mindestlänge die Einkopplung der konstanten Taktimpulse gesperrt und nach der Signalpause eine vorgegebene Anzahl von konstanten Taktimpulsen freigegeben wird,

b) einem Sender mit einer Impulssteuereinrichtung (102b), deren Ansteuereingang von mit den konstanten Taktimpulsen synchronen Ansteuerimpulsen beaufschlag ist und deren Ausgang Freigabesignale liefert, und einer Datenquelle (111, 112), die im Takt der Freigabesignale zu übermittelnde Datenimpulse in eine Datenleitung (L1) einkoppelt, wobei die Impulssteuerung mit dem Ende einer Signalpause rücksetzbar ist, und

c) einem Empfänger in der Empfangsstation mit einer an die Taktleitung angeschlossenen Pausenerkennungs-Einrichtung (104), einer von den empfangenen Taktimpulsen getriggerten Abtaststeuerung zur Bildung von Abtastimpulsen und einer an die Datenleitung angeschlossenen, von den Abtastimpulsen freigebbaren Abtasteinrichtung (114) an der die übertragenen Daten abgreifbar sind,

dadurch gekennzeichnet, daß die Pausenerkennungs-Einrichtung die von den Taktimpulsen getriggerten Abtastimpulse während einer Signalpause sperrt, die Abtaststeuerung zurücksetzt, wenn auf der Taktleitung eine eine vorgegebene Mindest-Synchronisierungs-Pause überschreitende Impulspause auftritt, und anschließend nach der vorgegebenen Anzahl von konstanten Taktimpulsen die Erzeugung zeitgesteuerter Abtastimpulse, die nur während der Dauer der konstanten Taktimpulse durch diese Taktimpulse synchronisiert werden, auslöst.

8. Vorrichtung nach Anspruch 7 zur Übertragung einer Zusatzinformation zwischen Taktimpulskoppler und Empfänger, dadurch gekennzeichnet, daß der Taktimpulskoppler eine Einkoppelschaltung (104a) enthält, durch die gegen Ende eines durch eine vorbestimmte Anzahl von Übertragungstaktperioden vorgegebenen Übertragungszyklus in den Pausen zwischen bestimmten konstanten Taktimpulsen Zusatz-Taktimpulse einkoppelbar sind, wobei zwischen der letzten Einkopplung eines Zusatzimpulses und dem Beginn eines neuen Übertragungszyklus eine Synchronisierungs-Pause vorgegebener Mindestlänge eingehalten ist, daß die Impulssteuerung jeweils nur am Ende eines Übertragungszyklus rücksetzbar ist, daß die Abtaststeuerung eine Zähleinrichtung (104c), die jeweils zwischen den bestimmten konstanten Taktimpulsen den Triggereingang der Abtaststeuerung sperrt, und eine Zeitsteuerung (104) enthält, die zeitgesteuerte Abtastimpulse liefert, daß an die Taktleitung ein Taktimpuls-Detektor (119a, 119c) angeschlossen ist, der mit den gesteuerten Abtastimpulsen abgetastet wird, und daß die Pausenerkennungs-Einrichtung die Abtaststeuerung zurücksetzt, wenn auf der Taktleitung eine die Mindest-Synchronisierungspause überschreitende Impulspause auftritt.

9. Vorrichtung nach Anspruch 8, dadurch gekennzeichnet, daß die Taktimpulse Lichtimpulse, die Taktleitung ein Lichtwellenleiter und der Zusatz-Taktimpuls ein Lichtimpuls verminderter Sendeleistung ist, und daß am Taktimpuls-Detektor die empfangene Leistung des Zusatz-Taktimpulses als Maß für die Güte der optischen Elemente abgetastet wird.

10. Vorrichtung nach Anspruch 7, dadurch gekennzeichnet, daß Übertragungstaktgeber, Taktimpulskoppler und Sender in einem gegen Erdpotential nicht geerdeten Gehäuse angeordnet sind, daß die Datenquelle ein an einem Hochspannungsnetz angeordnetes Meßglied mit einem Ausgang zur seriellen Datenausgabe und mit einer daran angeschlossenen, ersten steuerbaren Lichtquelle sowie mit Einrichtungen zum Einkoppeln von Zusatzimpulsen auf den Steuereingang der Lichtquelle enthält, daß die Impulssteuerung einen auch die erste Lichtquelle steuernden, vom Übertragungstakt-Geber getakteten programmierbaren Speicher enthält, daß die Datenquelle eine zweite steuerbare Lichtquelle enthält und daß die Taktleitung und die Datenleitung Lichtwellenleiter sind, an die im Empfänger lichtelektrische Detektoren angeschlossen sind.

## Revendications

1. Procédé pour la transmission de données entre deux postes de transmission de données, selon lequel des télégrammes d'impulsions de cadence, qui commencent par une partie fixe (PT) et qui sont séparés les uns des autres par une pause (P2), sont retransmis par l'intermédiaire d'une ligne de transmission d'impulsions de cadence, et des télégrammes de données (L1 à L5), qui commencent en même temps que les télégrammes d'impulsions de cadence, sont transmis par l'intermédiaire d'une ligne de transmission de données, et chaque télégramme de données est échantillonné pendant les parties fixes (PT) du télégramme d'impulsions de cadence, en synchronisme avec les impulsions de cadence (LT) de ce télégramme, et pendant les parties libres du télégramme d'impulsions de cadence et les pauses (P2) de ce télégramme, un échantillonnage est effectué d'une manière non-synchronisée au moyen d'une unité de commande temporelle, qui est synchronisée par des impulsions reçues dans la ligne de transmission d'impulsions de cadence, uniquement pendant des parties fixes des télégrammes des impulsions de cadence.

2. Procédé suivant la revendication 1, caractérisé par le fait que le télégramme d'impulsions de cadence est échantillonné d'une manière non synchronisée pendant des parties libres.

3. Procédé pour la transmission de données par l'intermédiaire de lignes de transmissions disposées approximativement parallèlement l'une à l'autre entre un poste émetteur et un poste récepteur éloigné, pour le traitement des données transmises, et selon lequel

a) lors de chaque cycle de transmission, l'émetteur

produit, pour la formation d'un télégramme d'impulsions de cadence, après une pause de ce télégramme, une partie fixe du télégramme constituée par une suite (PT), qui alterne à une cadence de transmission, d'impulsions de cadence constantes,

commande, pour la formation de télégrammes synchrones de données, dont les emplacements de données (1—15) peuvent être occupés librement par des impulsions de données, l'emplacement immédiatement suivant de données de chaque télégramme de données, au moyen de chaque flanc des impulsions de cadence et produit des impulsions de données, qui correspondent aux données devant être transmises,

commande, à la cadence de transmission, après une partie fixe du télégramme d'impulsions de cadence, l'occupation d'un ou plusieurs emplacements de données dans le télégramme de données et/ou dans le télégramme d'impulsions de cadence par des impulsions supplémentaires,

introduit le télégramme d'impulsions de cadence dans une ligne de transmission d'impulsions de cadence et introduit chacun des différents télégrammes de données dans une ligne particulière de transmission de données, et

ramène à l'état initial, lors de chaque pause dans le télégramme, la commande pour les emplacements de données des télégrammes de données et bloque l'injection d'impulsions dans la ligne de transmission d'impulsions de cadence, et

b) un récepteur

identifie, à partir de la pause du télégramme dans la ligne de transmission d'impulsions de cadence, le début des télégrammes de données et, après la fin de la pause, l'occupation d'impulsions dans les lignes de transmission de données, en synchronisme avec les impulsions de cadence reçues dans la ligne de transmission d'impulsions de cadence, et

réalise, après la fin de la partie fixe du télégramme d'impulsions de cadence, une commutation sur un échantillonnage des impulsions supplémentaires, qui est commandée dans le temps et est synchronisée uniquement pendant des parties fixes du télégramme d'impulsions de cadence, au moyen d'impulsions reçues dans la ligne de transmission d'impulsions de cadence.

4. Procédé suivant l'une des revendications 1 à 3, caractérisé en ce que l'émetteur détermine les emplacements de données des télégrammes de données au moyen d'une alternance de la cadence de transmission.

5. Procédé suivant la revendication 3, caractérisé par le fait que le récepteur détermine, au moyen du comptage des impulsions de cadence constante de la partie fixe du télégramme d'impulsions de cadence, la fin de ces impulsions et déclenche l'unité de commande temporelle qui forme, dans une cadence prédéterminée, des impulsions d'échantillonnage pour l'échantillonnage des impulsions supplémentaires.

6. Procédé suivant la revendication 3, caractérisé par le fait que les impulsions de données et les impulsions de cadence sont transmises respectivement par l'intermédiaire d'un système optique de transmission à partir d'une source de lumière commandable située dans l'émetteur, d'un guide d'ondes optiques formant ligne de transmission de données ou ligne de transmission d'impulsions de cadence et d'un composant électrique photosensible, et que pour le contrôle du système optique de transmission, indépendamment des données devant être transmises dans la ligne de transmission de données, une impulsion lumineuse possédant une puissance d'émission réduite est transmise en un emplacement prédéterminé d'un télégramme de données et en un emplacement prédéterminé du télégramme d'impulsions de cadence, situé à l'extérieur de la partie fixe de ce télégramme, et le signal de sortie, associé à cet emplacement prédéterminé, du composant à contrôler.

7. Dispositif pour transmettre des données entre un poste émetteur et un poste récepteur éloigné, en vue du post-traitement des données, comportant

a) un dispositif de couplage d'impulsions de cadence, commandé par un générateur de cadence de transmission (100), dans le poste émetteur (102a, 101, 102) pour injecter une suite, qui alterne à la cadence de transmission, d'impulsions de cadence constantes dans une ligne (LT) de transmission d'impulsions de cadence, l'injection des impulsions de cadence constantes étant bloquée pendant une pause du signal possédant une durée minimale prédéterminée et un nombre prédéterminé d'impulsions de cadence constantes étant libéré après la pause du signal,

b) un émetteur comportant un dispositif de commande d'impulsions (102b), dont l'entrée de commande est chargée par des impulsions de commande qui sont synchrones avec les impulsions de cadence constantes et dont la sortie délivre des signaux de libération, et une source de données (111, 112), qui injecte, à la cadence des signaux de libération, des impulsions de données devant être transmises, dans une ligne (L1) de transmission de données, la commande des impulsions pouvant être annulée à la fin d'une pause du signal,

c) un récepteur situé dans le poste récepteur et comportant un dispositif (104) d'identification des pauses, raccordé à la ligne de transmission de l'impulsion de cadence, une unité de commande d'échantillonnage déclenchée par les impulsions de cadence reçues et servant à former des impulsions d'échantillonnage et un dispositif d'échantillonnage (114) raccordé à la ligne de transmission de données et pouvant être libéré par les impulsions d'échantillonnage et au niveau duquel les données transmises peuvent être prélevées, caractérisé par le fait que le dispositif d'identification des pauses bloque les impulsions d'échantillonnage déclenchées par les impulsions de cadence pendant, une pause du signal, ramène à l'état initial l'unité de commande d'échantillonnage lorsqu'une pause entre impulsions, qui dépasse une pause prédéterminée minimale de synchronisation, apparaît dans la ligne de transmission d'impulsions de cadence, et ensuite déclenche, après un nombre prédéterminé d'impulsions de cadence constantes, la production d'impulsions d'échantillonnage qui sont commandées dans le temps et qui sont synchronisées uniquement pendant la durée des impulsions de cadence constantes, par ces impulsions de cadence.

8. Dispositif suivant la revendication 7 pour la transmission d'une information supplémentaire entre un dispositif de couplage de l'impulsion de cadence et un récepteur, caractérisé par le fait que le dispositif de couplage d'impulsions de cadence contient un circuit de couplage (104a), à l'aide duquel les impulsions de cadence supplémentaires peuvent être injectées, à la fin d'un cycle de transmission prédéterminé par un nombre prédéterminé de périodes de la cadence de transmission, dans les pauses entre des impulsions de cadence constantes déterminées, une pause de synchronisation possédant une durée minimale prédéterminée étant respectée entre la dernière injection d'une impulsion supplémentaire et le début d'un nouveau cycle de transmission, que la commande des impulsions peut être annulée uniquement à la fin d'un cycle de transmission, que l'unité de commande d'échantillonnage comporte un dispositif de comptage (50c), qui bloque l'entrée de déclenchement de l'unité de commande d'échantillonnage respectivement entre les impulsions de cadence constantes déterminées, et une unité de commande temporelle (104), qui délivre des impulsions d'échantillonnage commandées dans le temps, qu'à la ligne de transmission d'impulsions de cadence est raccordé un détecteur d'impulsions de cadence (119a, 119c), qui est échantillonné avec les impulsions d'échantillonnage commandées, et que le dispositif d'identification des pauses ramène à l'état initial l'unité de commande d'échantillonnage lorsqu'une pause entre impulsion dépassant la pause minimale de synchronisation apparaît dans la ligne de transmission d'impulsions de cadence.

9. Dispositif suivant la revendication 8, caractérisé par le fait que les impulsions de cadence sont des impulsions lumineuses, que la ligne de transmission d'impulsions de cadence est un guide d'ondes optiques et que l'impulsion de cadence supplémentaire est une impulsion lumineuse possédant une puissance d'émission réduite, et que, dans le détecteur d'impulsions de cadence, la puissance reçue de l'impulsion de cadence supplémentaire est échantillonnée en tant que mesure de la qualité des éléments optiques.

10. Dispositif suivant la revendication 7, caractérisé par le fait que le générateur de cadence de transmission, le dispositif de couplage des impulsions de cadence et l'émetteur sont disposés dans un boîtier non raccordé au potentiel de terre, que la source de données est un circuit de mesure disposé dans un réseau à haute tension et comportant une sortie pour la délivrance en série des données et une première source de lumière commandable raccordée à ce circuit de mesure, ainsi que des dispositifs pour injecter des impulsions supplémentaires à l'entrée de commande de la source de lumière, que l'unité de commande des impulsions comporte une mémoire programmable commandant également la première source de lumière et commandée de façon cadencée par le générateur de cadence de transmission, que la source de données comporte une seconde source de lumière commandable et que la ligne de transmission d'impulsions de cadence et la ligne de transmission de données sont des guides d'ondes optiques auxquels sont raccordés, dans le récepteur, des détecteurs photoélectriques.

**Claims**

1. Process for data transmission between two data stations, whereby by means of a clock line, clock messages beginning with a fixed clock message part (PT) and separated from one another by a message interval (P2) are transmitted, and by means of a data line data messages (L1 to L5) beginning synchronously with the clock messages are transmitted, and each data message is sampled during the fixed clock message parts (PT) synchronously with the clock pulses (LT) of the clock message and is sampled in an unsynchronized manner during free clock message parts and clock message intervals (P2) by means of a time control which is only synchronized during fixed clock message parts through pulses received on the clock line.

2. Process according to claim 1, characterized in that the clock message is also sampled in an unsynchronized manner during free clock message parts.

3. Process for data transmission by means of transmission lines laid approximately in parallel between a transmitting station and a receiving station arranged at a distance for the processing of the transmitted data, whereby

a) the transmitter in each transmission cycle

for the formation of a clock message after a message interval produces a fixed clock message part from a sequence (PT), alternating at a transmission clock rate, of constant clock pulses,

for the formation of synchronous data messages, the data positions (1—15) of which can be occupied freely with data pulses, by means of each pulse edge of the clock pulses controls the next data position of each data message and produces data pulses corresponding to the data to be transmitted,

at the transmission clock rate after a fixed clock message part controls the occupation of one or several data positions in the data message and/or in the clock message with additional pulses,

injects the clock message into a clock line and each of the several data messages into a particular data line, and

with each message interval resets the control for the data positions of the data messages and blocks the injection of pulses into the clock line, and

b) a receiver

recognizes from the message interval on the clock line the beginning of the data messages and after the end of the interval scans the pulse occupation on the data lines synchronously with the clock pulses received on the clock line and

after the end of the fixed clock message part changes over to a time-controlled sampling of the additional pulses which is only synchronized during fixed clock message parts through pulses received on the clock line.

4. Process according to one of claims 1 to 3, characterized in that the transmitter determines the data positions of the data messages through a half period of the transmission clock respectively.

5. Process according to claim 3, characterized in that by counting the constant clock pulses of the fixed clock message part the receiver ascertains their end and releases a time control which at a predetermined rate forms gate pulses for the sampling of the additional pulses.

6. Process according to claim 3, characterized in that the data pulses and the clock pulses in each case are transmitted by means of an optical transmission system from a controllable light source in the transmitter, a light wave conductor as data line or clock line and a light-sensitive electrical structural element and in that to monitor the optical transmission system independently of the data to be transmitted on the data line on a predetermined position of a data message and on a predetermined position of the clock message lying outside the fixed clock message part, in each case a light pulse of reduced transmitting power is transmitted and the output signal of the structural element associated with this predetermined position is monitored.

7. Device for data transmission between a transmitting station and a receiving station at a distance therefrom for the further processing of the data with

a) a clock pulse coupler controlled by a transmission clock generator (100) in the transmitting station (102a, 101, 102) for the injection of a sequence, alternating at the transmission clock rate, of constant clock pulses into a clock line (LT), whereby during a signal interval of specified minimum length the injection of the constant clock pulses is blocked and after the signal interval a specified number of constant clock pulses is released,

b) a transmitter with a pulse control device (102b), the control input of which is loaded by control pulses synchronous with the constant clock pulses and the output of which supplies release signals, and a data source (111, 112) which at the clock rate of the release signals injects data pulses, to be transmitted, into a data line (L1), whereby the pulse control can be reset with the end of a signal interval, and

c) a receiver in the receiving station with an interval recognition device (104) connected to the clock line, a sampling control triggered by the received clock pulses for the formation of sampling pulses and a sampling device (114), connected to the data line and capable of being released by the sampling pulses, on which the transmitted data can be picked up, characterized in that the interval recognition device blocks the sampling pulses triggered by the clock pulses during a signal interval, resets the sampling control, if a pulse interval exceeding a specified minimum synchronizing interval occurs on the clock line, and subsequently after the specified number of constant clock pulses releases the production of time-controlled sampling pulses which are only synchronized during the period of the constant clock pulses through these clock pulses.

8. Device according to claim 7 for the transmission of additional information between clock pulse coupler and receiver, characterized in that the clock pulse coupler contains an injection circuit (104a), by means of which towards the end of a transmission cycle specified by a predetermined number of transmission clock periods in the intervals between certain constant clock pulses additional clock pulses can be injected, whereby between the last injection of an additional pulse and the beginning of a new transmission cycle a synchronizing interval of specified minimum length is observed, in that the pulse control can only be reset at the end of a transmission cycle respectively, in that the sampling control contains a counting device (104c), which blocks the trigger input of the sampling control between the certain constant clock pulses respectively, and a time control (104) which supplies time-controlled sampling pulses, in that to the clock line there is connected a clock pulse detector (119a, 119c) which is sampled with the controlled sampling pulses, and in that the interval recognition device resets the sampling control if a pulse interval exceeding the minimum synchronizing interval occurs on the clock line.

9. Device according to claim 8, characterized in that the clock pulses are light pulses, the clock line is a light wave conductor and the additional clock pulse is a light pulse of reduced transmitting power, and in that on the clock pulse detector the received power of the additional clock pulse is sampled as measure for the quality of the optical elements.

10. Device according to claim 7, characterized in that transmission clock generator, clock pulse coupler and transmitter are arranged in a housing which is not earthed towards earth potential, in that the data source contains a measuring element arranged on a high-voltage network with an output for the serial data output and with a first controllable light source connected thereto and with devices for injecting additional pulses on the control input of the light source, in that the pulse control contains a programmable store also controlling the first light source and timed by the transmission clock generator, in that the data source contains a second controllable light source and in that the clock line and the data line are light wave conductors to which there are connected light-electrical detectors in the receiver.

FIG 1

**EP 0 222 195 B1**

FIG 2

2

FIG 3

FIG 4

4

FIG 5

FIG 6

FIG 7

FIG 8